# DEMANDE DE BREVET EUROPEEN

(11) **EP 2 621 241 A1**
(43) Date de publication de la demande: **31.07.2013**
(21) Numéro de dépôt: 13152381.3
(22) Date de dépôt: 23.01.2013
(51) Int. Cl.: H04W 76/02, H04L 12/58

(54) **Procédé d'établissement d'une communication sur internet entre terminaux mobiles, programme d'ordinateur et support d'enregistrement**

(30) Priorité: 24.01.2012 FR 1250694
(71) Demandeur: Streamwide, 75010 Paris (FR)
(72) Inventeur: Bouton, Thomas, 75011 PARIS (FR)
(74) Mandataire: Cabinet Plasseraud

(57) **Abrégé**

L'invention concerne un procédé d'établissement d'une communication sur internet entre un premier terminal mobile (A) et un deuxième terminal mobile (B), ce procédé comprenant le transfert (100) de données de connexion entre lesdits terminaux mobiles au moyen de messages textuels de données et l'établissement (200) d'une communication entre lesdits terminaux sur le réseau internet au moyen des données de connexion transférées.

## Description

L'invention concerne le domaine de la téléphonie mobile, et plus particulièrement celui de la communication entre téléphones mobiles sur le réseau internet.

Depuis un certain temps déjà, les téléphones mobiles de dernières générations ont la possibilité d'accéder au réseau internet, par exemple pour naviguer sur ce réseau comme cela est possible depuis plus longtemps avec un ordinateur personnel.

Outre le fait de pouvoir naviguer sur le réseau internet, il est également souhaitable de pouvoir donner aux téléphones mobiles l'accès à d'autres services fournis sur internet et déjà offerts aux ordinateurs personnels, notamment à des services permettant aux téléphones mobiles de communiquer entre eux grâce au protocole IP.

Par exemple, les services de communications comme la voix sur IP et la messagerie instantanée sont très populaires parmi les utilisateurs d'ordinateurs personnels et il est souhaitable de permettre à des téléphones mobiles de pouvoir accéder à de tels services en mode pair à pair.

Malheureusement, la technologie d'accès au réseau internet actuellement disponible pour les téléphones mobiles n'est pas vraiment adaptée à ce type de services.

En effet, pour permettre l'établissement de communications IP entre plusieurs utilisateurs de téléphones mobiles, il faut en général configurer un certain nombre d'identifiants et d'adresses de serveurs intermédiaires que les utilisateurs ne connaissent usuellement pas et auxquelles ils n'ont pas accès facilement.

Ainsi, avec le protocole SIP utilisé entre autres pour la téléphonie par internet et la messagerie instantanée, il peut être difficile pour un terminal mobile d'identifier un autre terminal mobile cherchant désireux d'engager une communication et de déterminer dans quel réseau se trouve cet autre terminal.

Surtout, et c'est par exemple le cas avec les téléphones intelligents (« smartphones ») ou terminaux de poche, dans la mesure où une adresse IP est attribuée de façon aléatoire à un terminal mobile par le serveur d'un opérateur, cette adresse IP est temporaire et n'est garantie que pendant la durée d'une connexion spécifique, ce qui complexifie la configuration de certains services fournis sur internet, notamment lorsque les terminaux mobiles se déplacent et changent de réseau d'accès.

L'invention vise à simplifier l'établissement d'une communication entre téléphones mobiles sur internet.

A cet effet, l'invention propose un procédé d'établissement d'une communication sur internet entre un premier terminal mobile et un deuxième terminal mobile, caractérisé par le transfert de données de connexion entre lesdits terminaux mobiles au moyen de messages textuels de données et l'établissement d'une communication entre lesdits terminaux, au moyen des données de connexion transférées, par le biais d'un service fourni sur le réseau internet.

Grâce à ces dispositions, l'établissement d'une connexion par un service internet nécessite simplement de connaître le numéro de téléphone ou numéro MSISDN (« Mobile Station ISDN Number ») du correspondant.

Le numéro de téléphone est à la fois aisé à obtenir et à retenir car il comprend un nombre de chiffres raisonnables et il est déjà abondamment employé dans les communications entre utilisateurs du réseau mobile.

De plus, alors que les adresses IP peuvent être amenées à changer au gré des connexions et déconnexion au réseau, le numéro de téléphone est un identifiant unique et stable dans le temps.

Enfin, le transfert de données de connexion au moyen de messages textuels de données permet d'établir la communication sur le réseau internet de façon transparente pour les utilisateurs des terminaux.

Dans divers modes de réalisation du procédé selon l'invention, on peut éventuellement avoir recours en outre à l'une et/ou à l'autre des dispositions suivantes :
- l'étape de transfert de données de connexion comprend l'envoi d'un premier message textuel de données du premier terminal mobile au deuxième terminal mobile, le premier message textuel de données comprenant des premières données d'identification du premier terminal ;
- le premier message textuel de données comporte en outre des données d'identification du protocole de communication utilisé par le service fourni sur le réseau internet ;
- l'étape de transfert de données de connexion comprend l'envoi d'un deuxième message textuel de données du deuxième terminal mobile au premier terminal mobile, le deuxième message textuel de données comprenant des deuxièmes données d'identification du deuxième terminal ;
- l'étape de transfert de données de connexion comprend l'envoi de deuxièmes données d'identification du deuxième terminal mobile au premier terminal mobile, par le biais du réseau internet ;
- l'étape de transfert de données de connexion comprend, après réception du premier message textuel par le deuxième terminal, l'envoi d'un message d'accusation de réception du deuxième terminal mobile au premier terminal mobile ;
- au moins une étape d'envoi de données d'identification comprend une opération de récupération automatique, depuis la mémoire du terminal desdites données d'identification ;
- au moins une étape d'envoi de données d'identification comprend une opération de génération automatique d'un message textuel de données par un terminal ;
- au moins une étape d'envoi de données d'identification comprend une opération de transmission automatique de l'un des terminaux mobile à l'autre, d'un message textuel de données, la transmission étant effectuée par le biais d'un réseau de téléphonie mobile identifiant les terminaux par leur numéro de téléphone ;
- au moins une étape d'envoi de données d'identification comprend une opération d'extraction automatique des données premier message textuel de données, par un terminal ;
- les données d'identification et les données d'identification du service fourni sur internet sont rassemblées au sein d'une adresse http et/ou d'un identifiant de ressource uniforme ;
- les étapes de transférer des données de connexion et d'établir une communication par le biais d'un service fourni sur le réseau internet sont réitérée en cas de déconnexion du réseau internet du premier terminal mobile ou du deuxième terminal mobile.

Par ailleurs, l'invention a également pour objet un produit programme d'ordinateur comprenant des instructions aptes à mettre en oeuvre le procédé défini ci-dessus, lors d'une exécution de ce programme par un processeur d'un terminal mobile.

Par ailleurs, l'invention a également pour objet un support d'enregistrement non transitoire sur lequel est stocké le programme d'ordinateur.

Le procédé, objet de l'invention, sera mieux compris à la lecture de la description et à l'observation des dessins ci-après dans lesquels :
- la figure 1 est un schéma synoptique illustrant une architecture de communication pouvant employer un procédé d'établissement d'une communication sur internet selon l'invention ;
- la figure 2 est un organigramme illustrant un mode de réalisation du procédé d'établissement d'une communication sur internet selon l'invention ;
- la figure 3 est un organigramme illustrant un mode de réalisation du procédé d'établissement d'une communication sur internet selon l'invention ;

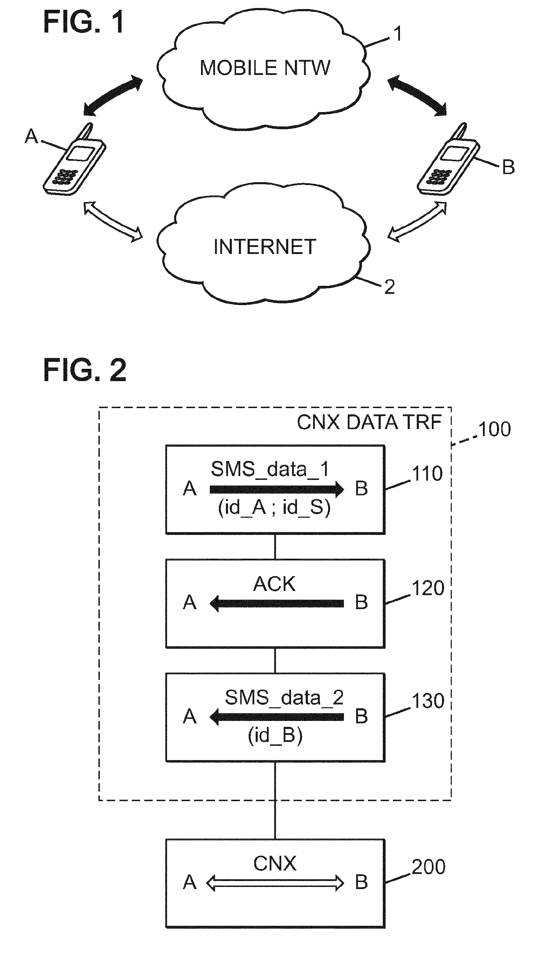

On se réfère tout d'abord à la figure 1 sur laquelle sont représentés deux terminaux mobiles A et B, connectés entre eux par un réseau de téléphonie mobile 1 (aussi appelé réseau mobile terrestre), par exemple un réseau GSM (« Global System for Mobile Communications »), UMTS (« Universal Mobile Telecommunications System ») ou des réseaux de générations postérieures et désireux de communiquer entre eux par le biais du réseau Internet 2.

Dans ce qui suit, on entend par le terme de « terminal mobile » tout dispositif capable d'utiliser un réseau téléphonique cellulaire ou réseau de téléphonie mobile, comme par exemple un téléphone mobile, un smartphone, un ordinateur ou une tablette portable munis d'une connexion à un réseau mobile.

On se réfère maintenant en outre à la figure 2 sur laquelle est illustré un mode particulier du procédé d'établissement d'une communication sur internet selon l'invention.

Ce procédé comporte une première étape 100 de transfert de données de connexion entre lesdits terminaux mobiles A et B. Cette étape de transfert de données de connexion s'effectue au moyen de l'envoi de messages textuels de données, par exemple selon le protocole Short Message Service - Point to Point (SMS-PP) tel qu'il est défini dans la norme de téléphonie mobile GSM 03.40.

On entend ici par le terme de « message textuel de données » un message textuel de type SMS qui n'est pas destiné à être affiché pour l'utilisateur, mais sert habituellement à transmettre des données (de façon invisible pour l'utilisateur du terminal mobile) nécessaires à certaines applications ou services gérées par le terminal mobile. Ce type de message est également désigné par « SMS Data » en anglais.

De tels messages textuels de données sont définis dans la norme GSM 03.40.

Suite à cette étape 100 de transfert de données de connexion utilisant des messages textuels de données, les données de connexion ainsi transférées sont alors utilisées, lors d'une étape de connexion 200, pour établir une communication entre les terminaux A et B au moyen d'un service fourni sur le réseau internet. L'établissement de cette communication peut se faire, par exemple, au moyen du protocole SIP ou de tout autre protocole TCP/IP, par exemple HTTP ou XMPP.

Ainsi, grâce à l'utilisation de tels messages textuels de données, l'échange de données de connexion nécessaires à l'établissement d'une communication sur internet entre les terminaux A et B peut se faire simplement par le biais du réseau de téléphonie mobile, et ce de façon invisible pour les utilisateurs des terminaux A et B. La connexion se faisant de point à point, il n'est pas nécessaire de disposer d'une infrastructure centralisée supplémentaire à celle du réseau mobile existant pour établir la communication.

En particulier, l'étape de transfert de données comprend une première sous-étape 110 d'envoi d'un premier message textuel de données SMS_data_1 du premier terminal A au deuxième terminal B, cet envoie étant réalisé par le biais du réseau de téléphonie mobile.

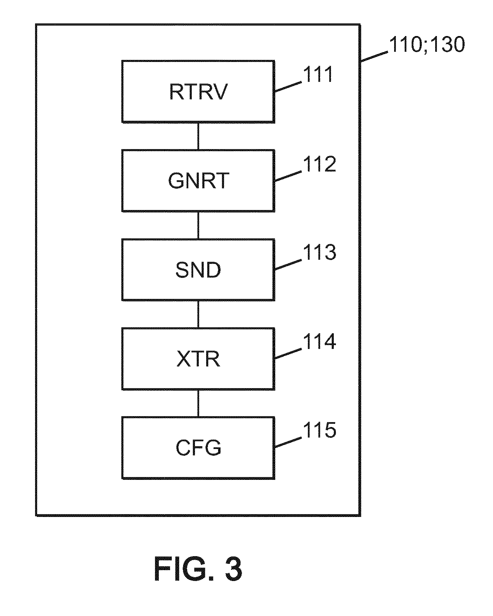

On se réfère maintenant en outre à la figure 3 sur laquelle est illustré un mode de réalisation particulier d'une sous-étape d'envoi d'un message textuel de données d'un procédé selon l'invention.

La première sous-étape 110 peut par exemple comprendre une première opération 111 de récupération automatique, depuis la mémoire du premier terminal A, de données id_A d'identification du premier terminal A qui vont permettre au terminal B d'établir la communication sur le réseau internet avec le terminal A.

Cette opération de récupération automatique peut également comprendre la récupération de données d'identification id_S du protocole de communication, utilisé par le service fourni sur le réseau internet, et à utiliser pour permettre la communication entre les deux terminaux A et B. Ces données d'identification id_S peuvent désigner directement le protocole de communication lui-même ou bien désigner indirectement ce protocole.

Cette opération peut être réalisée par un module de transmission, installé sur le premier terminal A.

Dans encore un mode de réalisation, le module de transmission pourra être intégré au système d'exploitation du premier terminal A.

Puis, une seconde opération de génération du message textuel (opération 112) comprend la génération automatique d'un premier message textuel de données SMS_data_1.

Ce premier message SMS_data_1 peut comprendre les données id_A d'identification du premier terminal A.

Ce premier message SMS_data_1 peut en outre comprendre les données d'identification id_S du protocole de communication.

Les données d'identifications du premier terminal A et du protocole de communication à utiliser pour la communication peuvent être introduites dans des champs spécifiques distincts du message textuel de données SMS_data_1 ou bien rassemblées au sein d'un même champ, en fonction du type de service permettant la communication entre les deux terminaux.

Au cours d'une troisième opération d'envoi 113, le premier message textuel de données SMS_data_1 est transmis automatiquement par le biais du réseau mobile depuis le premier terminal mobile A au deuxième terminal mobile B. Cette transmission se fait par l'intermédiaire du réseau de téléphonie mobile et utilise donc comme identifiant du destinataire son numéro de téléphone ou numéro MSISDN (« Mobile Station ISDN Number »).

Le premier message textuel de données SMS_data_1 est reçu par le deuxième terminal B par exemple directement par un module de réception, installé sur le deuxième terminal B, le module de réception étant par exemple en cours d'exécution lors de la réception du premier message SMS_data_1.

Dans un mode de réalisation alternatif, le premier message textuel peut être reçu par un module du système d'exploitation du deuxième terminal B, par exemple un système de notifications ou d'alertes automatisées qui pourra par exemple avertir l'utilisateur ou exécuter le programme selon l'invention.

Dans encore un mode de réalisation, le module de réception selon l'invention pourra être intégré au système d'exploitation du deuxième terminal B.

Une quatrième opération 114 d'extraction automatique des données premier message textuel de données SMS_data_1 peut alors être réalisée par un module du deuxième terminal B, par exemple par le module de réception. Cette opération comporte l'extraction des données id_A d'identification du premier terminal A et, si elles existent, des données d'identification id_S du protocole de communication.

Une cinquième opération de configuration 115 comprend la mise-à-jour, ou en variante la création, à partir des données extraites du premier message textuel de données SMS_data_1, d'une configuration de connexion pour l'établissement de la communication entre le premier terminal A et le deuxième terminal B.

Ainsi, dans certains modes de réalisation, le deuxième terminal B recevant, d'une part, des données d'identification du premier terminal A et, d'autre part, des données d'identification du protocole de communication à utiliser pour établir la communication entre les deux terminaux, est donc apte à établir la communication avec le terminal A identifié par les données d'identification id_A, en accédant par le réseau internet au service requis au moyen du protocole de communication identifié par id_S. En variante, le protocole de communication à utiliser peut ne pas avoir à être fourni, soit par exemple parce qu'un seul protocole est employé, soit parce qu'un choix préalable de protocole a été réalisé.

A titre d'exemple, dans le cas d'un service basé sur le protocole HTTP, le deuxième terminal B (alors appelé terminal client) est ainsi capable de se connecter au premier terminal A (alors appelé terminal serveur).

Lorsqu'il est avantageux que le protocole de communication utilisé pour communiquer sur le réseau internet ait également la connaissance par le premier terminal A de données d'identification du deuxième terminal B, l'étape de transfert de données de connexion comprend en outre une sous-étape 130 d'envoi d'un deuxième message textuel de données SMS_data_2, du deuxième terminal B au premier terminal A. Ce deuxième message textuel de données SMS_data_2 comprend alors des données d'identification id_B du deuxième terminal B, qui peuvent être utilisée par le premier terminal A pour communiquer avec ce deuxième terminal B.

C'est par exemple le cas lorsque le protocole de communication employé pour établir la communication sur le réseau internet est le protocole SIP. Dans ce cas, le premier terminal A utilise l'adresse du deuxième terminal B pour initier la communication avec ce terminal, notamment dans une optique de tarification. Un tel protocole SIP peut alors être utilisé pour la transmission d'appels vidéo, par exemple.

Un autre exemple peut être le cas où le premier terminal A propose une communication en voix sur IP au deuxième terminal B. Un premier message SMS_data_1 est tout d'abord envoyé du premier au deuxième terminal comme décrit ci-avant (sous-étape 110). Puis, un logiciel installé sur le deuxième terminal B peut par exemple recevoir ce premier message et avertir l'utilisateur du deuxième terminal B. Dans le cas où ledit utilisateur indique qu'il accepte la communication, un second message SMS_data_2 comprenant l'adresse IP du deuxième terminal B est renvoyé au premier terminal A qui peut alors établir une communication avec le protocole souhaité. Le logiciel installé sur le deuxième terminal B peut accepter cette communication automatiquement.

De plus si les premier et deuxième terminaux A, B sont tous les deux connectés par des réseaux privés tels que des intranets (par moyen d'une traduction d'adresse réseau « NAT »), le deuxième terminal B peut proposer un proxy pour le protocole choisi au premier terminal A de telle sorte que la liaison se fasse sans problèmes.

L'envoi de ce deuxième message textuel de données SMS_data_2 comprend des opérations similaires à celles qui viennent d'être décrites pour l'envoi du premier message textuel de données SMS_data_1, les rôles des premier et deuxième terminaux étant échangés.

Des modules de transmission et de réception symétriques seront alors installés sur les premier et deuxième terminaux ou feront partie intégrante des systèmes d'exploitation desdits terminaux.

Dans une variante de ce mode de réalisation, l'envoi (sous-étape 130) des données d'identification id_B du deuxième terminal B au premier terminal A peut être réalisé par le biais du réseau internet. Ce mode de réalisation peut être avantageux dans le cas où l'échange des messages textuels est limité, par exemple par l'opérateur du réseau téléphonique ou par une surcharge du réseau mobile.

De façon avantageuse, lors de l'étape de transfert de données de connexion, un message ACK d'accusé de réception est envoyé par le deuxième terminal B au premier terminal A au cours d'une sous-étape 120, après réception du premier message textuel de données SMS_data_1 par le deuxième terminal B, afin de confirmer la réception de ce premier message textuel de données SMS_data_1

Un message ACK d'accusé de réception est prévu dans le standard TS 23.402 et peut être utilisé dans ce but. Cependant, cette fonctionnalité du standard TS 23.402 est parfois désactivée par les opérateurs de téléphonie mobile, notamment en cas de fort trafic, et il peut être avantageux de prévoir l'envoi d'un message ASK d'accusé de réception par un autre biais, par exemple un message textuel de donnée selon le protocole Short Message Service - Point to Point (SMS-PP) tel qu'il est défini dans la norme de téléphonie mobile GSM 03.40.

L'envoi d'un tel message ACK d'accusé de réception permet au premier terminal A de savoir si le deuxième terminal B a bien reçu le message textuel de données SMS_data_1 et en particulier si le deuxième terminal de données B est en fonctionnement. Le message ACK peut cependant ne pas comprendre d'information concernant la capacité du deuxième terminal B à gérer le protocole de communication désigné par le premier terminal A.

En effet, si le premier terminal A ne reçoit pas le message ACK d'accusé de réception provenant du deuxième terminal B, le premier terminal A en déduit que l'absence de réponse du deuxième terminal B est causée par la non-réception du premier message textuel de données SMS_data_1. Le premier terminal A peut alors tenter de réémettre ce premier message.

En revanche, si le premier terminal A reçoit le message ACK d'accusé de réception provenant du deuxième terminal B mais ne reçoit pas de deuxième message de données textuel SMS_data_2, le premier terminal A en déduit que l'absence de réponse du deuxième terminal B est causée par l'incapacité du terminal B à gérer le type de protocole de communication souhaité par le premier terminal A (et désigné par les données d'identification id_S dans le premier message textuel de données SMS_data_1).

Dans ce cas, l'utilisateur du premier terminal A peut alors renoncer à établir une communication sur internet avec le deuxième terminal B au moyen de ce protocole de communication particulier.

Dans un mode de réalisation de l'invention, les premières données d'identification id_A et les données d'identification id_S du protocole de communication sont rassemblées et se présentent sous la forme d'une adresse IP, formulée par exemple selon le protocole http, insérée dans un champ du message textuel de données SMS_data_1.

L'adresse IP peut ainsi être de la forme :
sip://A@192.168.1.234

Dans ce premier mode de réalisation, le deuxième terminal B peut alors accéder au réseau internet et utiliser cette adresse IP pour communiquer avec le premier terminal A.

A titre purement illustratif, les deux terminaux A et B peuvent alors communiquer par le biais d'une messagerie instantanée par exemple par le réseau de messagerie instantanée « jabber » ou en utilisant un client SIP.

Alternativement, les données d'identification id_A et les données d'identification du service requis id_S peuvent être rassemblées sous la forme d'un identifiant uniforme de ressource (ou URI en anglais), inséré dans un champ du message textuel de données SMS_data_1.

Un identifiant uniforme de ressource contient différents éléments d'identification tels que, par exemple, l'adresse ip ou le protocole. Un identifiant uniforme de ressource présente en outre l'intérêt d'être manipulé nativement par un certain nombre de protocoles.

De façon avantageuse, l'étape de transfert 100 de données de connexion entre lesdits terminaux mobiles A et B ainsi que l'étape de connexion 200 peuvent être réitérées lorsque le premier terminal A et/ou le deuxième terminal B sont déconnectés du réseau internet. De cette façon, en cas de changement d'adresse ip consécutif à une déconnexion puis reconnexion au réseau internet, la reprise de la communication entre les terminaux A et B au moyen d'un service fourni sur le réseau internet s'effectue de façon transparente pour l'utilisateur.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, parmi les différentes applications possibles de l'invention, les services de messagerie instantanée et le transfert d'appel vidéo ont été décrits précédemment. Cependant, l'invention peut également s'appliquer aux échanges en voix sur IP, à l'échange de fichiers, au support à distance, à la synchronisation d'informations comme par exemple des calendriers, des contacts ou des emails.

## Revendications

1. Procédé d'établissement d'une communication sur internet entre un premier terminal mobile (A) et un deuxième terminal mobile (B), **caractérisé par** le transfert (100) de données de connexion entre lesdits terminaux mobiles au moyen de messages textuels de données et l'établissement (200) d'une communication entre lesdits terminaux, au moyen des données de connexion transférées, par le biais d'un service fourni sur le réseau internet.

2. Procédé selon la revendication 1, **caractérisé en ce que** l'étape de transfert de données de connexion comprend l'envoi (110) d'un premier message textuel de données (SMS_data_1) du premier terminal mobile au deuxième terminal mobile, le premier message textuel de données comprenant des premières données d'identification (id_A) du premier terminal.

3. Procédé selon la revendication 2, **caractérisé en ce que** le premier message textuel de données (SMS_data_1) comporte en outre des données d'identification (id_S) du protocole de communication utilisé par le service fourni sur le réseau internet.

4. Procédé selon l'une quelconque des revendications 2 à 3, **caractérisé en ce que** l'étape de transfert de données de connexion comprend l'envoi (130) d'un deuxième message textuel de données (SMS_data_2) du deuxième terminal mobile au premier terminal mobile, le deuxième message textuel de données comprenant des deuxièmes données d'identification (id_B) du deuxième terminal.

5. Procédé selon l'une quelconque des revendications 2 à 4, **caractérisé en ce que** l'étape de transfert de données de connexion comprend l'envoi (130) de deuxièmes données d'identification (id_B) du deuxième terminal mobile au premier terminal mobile, par le biais du réseau internet.

6. Procédé selon l'une quelconque des revendications 2 à 5, **caractérisé en ce que** l'étape de transfert de données de connexion comprend, après réception du premier message textuel par le deuxième terminal, l'envoi (120) d'un message d'accusation de réception (ACK) du deuxième terminal mobile au premier terminal mobile.

7. Procédé selon l'une des revendications 2 à 6, **caractérisé en ce qu'**au moins une étape d'envoi (110, 130) de données d'identification comprend une opération (111) de récupération automatique, depuis la mémoire du terminal desdites données d'identification.

8. Procédé selon l'une des revendications 2 à 7, **caractérisé en ce qu'**au moins une étape d'envoi (110, 130) de données d'identification comprend une opération (112) de génération automatique d'un message textuel de données par un terminal.

9. Procédé selon l'une des revendications 2 à 8, **caractérisé en ce qu'**au moins une étape d'envoi (110, 130) de données d'identification comprend une opération (113) de transmission automatique de l'un des terminaux mobile à l'autre, d'un message textuel de données, la transmission étant effectuée par le biais d'un réseau de téléphonie mobile identifiant les terminaux par leur numéro de téléphone.

10. Procédé selon l'une des revendications 2 à 9, **caractérisé en ce qu'**au moins une étape d'envoi (110, 130) de données d'identification comprend une opération (114) d'extraction automatique des données premier message textuel de données, par un terminal.

11. Procédé selon l'une des revendications 2 à 10, **caractérisé en ce que** les données d'identification et les données d'identification du service fourni sur internet sont rassemblées au sein d'une adresse http et/ou d'un identifiant de ressource uniforme.

12. Procédé selon l'une des revendications 1 à 11, **caractérisé en ce que** les étapes de transférer (100) des données de connexion et d'établir (200) une communication par le biais d'un service fourni sur le réseau internet sont réitérée en cas de déconnexion du réseau internet du premier terminal mobile (A) ou du deuxième terminal mobile (B).

13. Produit programme d'ordinateur comprenant des instructions aptes à mettre en oeuvre un procédé selon l'une quelconque des revendications 1 à 12, lors d'une exécution de ce programme par un processeur d'un terminal mobile.

14. Support d'enregistrement non transitoire sur lequel est stocké le programme d'ordinateur selon la revendication 13.
